(19) Europäisches Patentamt
European Patent Office
Office européen des brevets

(11) **EP 2 200 201 B1**

(12) **EUROPEAN PATENT SPECIFICATION**

(45) Date of publication and mention
of the grant of the patent:
**11.01.2017 Bulletin 2017/02**

(51) Int Cl.:
*H04J 11/00* *(2006.01)*     *H04B 7/08* *(2006.01)*
*H04L 1/20* *(2006.01)*     *H04L 27/26* *(2006.01)*

(21) Application number: **08828735.4**

(22) Date of filing: **01.09.2008**

(86) International application number:
**PCT/JP2008/065698**

(87) International publication number:
**WO 2009/028711 (05.03.2009 Gazette 2009/10)**

(54) **DIVERSITY RECEIVING DEVICE, DIVERSITY RECEIVING METHOD, AND DIGITAL TELEVISION RECEIVING DEVICE**

DIVERSITÄTSEMPFANGSVORRICHTUNG, DIVERSITÄTSEMPFANGSVERFAHREN UND DIGITALER FERNSEHEMPFÄNGER

DISPOSITIF DE RÉCEPTION EN DIVERSITÉ, PROCÉDÉ DE RÉCEPTION EN DIVERSITÉ, ET DISPOSITIF DE RÉCEPTION DE TÉLÉVISION NUMÉRIQUE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **31.08.2007 JP 2007226678**
**28.09.2007 JP 2007253312**

(43) Date of publication of application:
**23.06.2010 Bulletin 2010/25**

(73) Proprietor: **Fujitsu Ten Limited**
**Hyogo 652-8510 (JP)**

(72) Inventors:
• **CHINDA, Takeshi**
**Kobe-shi**
**Hyogo 652-8510 (JP)**
• **TAKAYAMA, Kazuo**
**Kobe-shi**
**Hyogo 652-8510 (JP)**
• **GOHHARA, Hidenori**
**Kobe-shi**
**Hyogo 652-8510 (JP)**
• **NISHIWAKI, Kohzoh**
**Kobe-shi**
**Hyogo 652-8510 (JP)**
• **YOSHIMOTO, Takumi**
**Kobe-shi**
**Hyogo 652-8510 (JP)**

(74) Representative: **Gill Jennings & Every LLP**
**The Broadgate Tower**
**20 Primrose Street**
**London EC2A 2ES (GB)**

(56) References cited:
JP-A- 09 284 191    JP-A- 10 256 967
JP-A- 2000 183 844    JP-A- 2000 252 950
JP-A- 2001 230 752    JP-A- 2003 051 768
JP-A- 2003 051 768    JP-A- 2007 208 748
US-A- 5 351 274    US-A1- 2004 081 131

**Description**

TECHNICAL FIELD

The present invention relates to a diversity receiving device, a diversity receiving method, and a digital television receiving apparatus that calculate the SN ratio of each received signal, each received signal being an OFDM (Orthogonal Frequency Division Multiplexing) modulated signal diversity-received by a plurality of branches, and demodulate an input signal that is created by weighting the received signals depending on their SN ratios and combining the weighted received signals.

BACKGROUND ART

With the spread of wireless communications, such as mobile communications, digital terrestrial broadcasting, and wireless LAN communications, a radio-wave multiplexing scheme called "OFDM" has bee used more and more to efficiently use radio-wave band and prevent a shortage of radio-wave bands for transmitting radio wave.

An OFDM symbol, which is transmitted using the OFDM, is formed with a part called "valid symbol" that includes user data that is the content information to be transmitted and a part called "guard interval" that is used to reduce the effect of intersymbol interference. The guard interval is a copy of a predetermined number of samples at the end of the "valid symbol" and is added to the head of the "valid symbol".

Due to wireless transmission channels, wireless communications are largely affected by transmission environment. Therefore, in wireless communication, a degradation of transmission quality is inevitable in poor transmission environments. It follows that the OFDM that is used in wireless communication has the problem of degradation of transmission quality.

To alleviate the degradation of transmission quality and maintain a sufficiently high transmission quality, some OFDM reception devices adopt a method called a "diversity scheme" that uses a plurality of receiving results, which are results of a receiving process in which a plurality of antennas receives a radio wave and different branches process the received radio waves, so as to obtain a high-quality receiving result.

Patent documents 1 to 3, for example, disclose diversity receiving devices that calculate SN (Signal to Noise) ratios (or CN (Carrier to Noise) ratios) of the received waves on a branch basis, weight the branch-based receiving results depending on the SN ratios (or CN ratios), and add them together. The diversity receiving devices can obtain a receiving result which reflects a preferable received wave by larger degree, and improve the receiving quality.

    Patent document 1: Japanese Patent Application Laid-open No. 2003-51768
    Patent document 2: Japanese Patent Application Laid-open No. 2006-253915
    Patent document 3: Japanese Patent Application Laid-open No. H9-312602

DISCLOSURE OF INVENTION

PROBLEM TO BE SOLVED BY THE INVENTION

The conventional technology disclosed in, for example, the above-described patent documents 1 to 3 involve a complicated computing process for calculation of the SN ratios (or CN ratios), which disadvantageously results in a complicated configuration of a circuit that performs the computing process and a long computing time. Moreover, the conventional diversity receiving device cannot eliminate the effect of delayed waves and ghosts caused by multipaths and the effect of noise of a particular frequency included in the received waves; therefore, it is difficult to calculate preferable SN ratios (or CN ratios).

The present invention has been achieved to solve the above problems (issues) in the conventional technology and it is an object of the present invention to provide a diversity receiving device, a diversity receiving method, and a digital television receiving apparatus that has a simple configuration so that the circuit that calculates SN ratios (CN ratios) does not have a complicated configuration and at the same time improves the quality of a receiving result by using preferable SN ratios (or CN ratios) that are calculated after the effect of delayed waves and ghosts caused by multipaths and the effect of noise of a particular frequency included in the received waves are eliminated.

MEANS FOR SOLVING PROBLEM

To solve the problems as described above and to achieve an object, a diversity receiving device according to an aspect of the present invention includes an SN-ratio calculating unit that calculates an SN ratio of each of received signals that are OFDM modulated signals diversity-received by L number of branches, wherein the SN-ratio calculating unit calculates the SN ratio as follows

X(n) that is defined by the following equation is calculated first

$$X_{(n)} = \sum_{i=n-N}^{n} |S(I, i + Nu) - S(I, i)| \qquad (1)$$

where S(I, i) is an output of a signal that is an i-th sample of an I-th symbol of the received signal, n is a sample number of an n-th sample of the I-th symbol, N is an integer smaller than Ng that is the number of samples of the guard interval of the I-th symbol, and $N_u$ is the number of samples of a valid symbol, and then

SN(I) that is the SN ratio is calculated using the following equation

$$SN(I) = \frac{N_{max}(I) - N_{min}(I)}{N_{min}(I)} \qquad (2)$$

where $N_{max}(I)$ is the maximum value of the I-th symbol and $N_{min}(I)$ is the minimum value of the I-th symbol.

Further, in the above-described aspect of the invention, the value of N is defined by the following equation

$$N = N_g/8 \qquad (3).$$

Further, in the above-described aspect of the invention, the diversity receiving device further includes an input-signal weighting/combining unit that creates an input signal by weighting the received signals depending on the SN ratios that are calculated by the SN-ratio calculating unit and combining weighted received signals, wherein the input-signal weighting/combining unit uses a weighting coefficient $W_j$ that is expressed by the following equation

$$W_j = \frac{SN_j^2}{\sum_{k=1}^{L} SN_k^2} \qquad (4)$$

where $SN_j$ is the SN ratio of the received signal that is diversity-received by a j-th branch, and the input-signal weighting/combining unit creates the input signal using the following equation

$$SI = \sum_{j=1}^{L} (Sj + Nj) \times Wj \qquad (5)$$

where SI is the input signal, $S_j$ is an output of the received signal from a branch j (1≤j≤L), and $N_j$ is a noise output.

Further, in the above-described aspect of the invention, the diversity receiving device further includes a guard-interval identifying unit that identifies a period of a guard interval of the I-th symbol using $X_{Ng}(n)$ that is defined by the following equation

$$X_{Ng}(n) = \sum_{i=n-Ng}^{n} |S(I, i + Nu) - S(I, i)| \qquad (6),$$

and a multipath-noise calculating unit that calculates a difference between the value of X(n) and the value of $N_{min}(I)$, which is caused by multipath noise, of the period of the guard interval that is identified by the guard-interval identifying unit and notifies, if the difference is equal to or larger than a predetermined threshold, the input-signal weighting/combining unit of the fact, wherein if the input-signal weighting/combining unit is notified by the multipath-noise calculating unit that the difference is equal to or larger than the predetermined threshold, the input-signal weighting/combining unit sets the weighting coefficient, which is used to create the input signal by combining the received signals that are diversity-received by the branches, to a value equal to or smaller than a predetermined value.

Further, according to another aspect of the invention, a diversity receiving method includes an SN-ratio calculating step of calculating an SN ratio of each of received signals that are OFDM modulated signals diversity-received by L number of branches, and an input-signal creating step of creating an input signal by weighting the received signals depending on the SN ratios that are calculated at the SN-ratio calculating step and combining weighted received signals, the method including a demodulating process of demodulating the input signal that is created at the input-signal creating step, wherein the SN-ratio calculating step includes calculating X(n) that is defined by the following equation

$$X_{(n)} = \sum_{i=n-\frac{Ng}{3}}^{n} \left| S(I, i + Nu) - S(I, i) \right| \tag{7}$$

where S(I, i) is an output of a signal that is an i-th sample of an I-th symbol of the received signal, n is a sample number of an n-th sample of the I-th symbol, N is an integer smaller than Ng that is the number of samples of the guard interval of the I-th symbol, and $N_u$ is the number of samples of a valid symbol and, and calculating SN(I) that is the SN ratio using the following equation

$$SN(I) = \frac{N_{\max}(I) - N_{\min}(I)}{N_{\min}(I)} \tag{8}$$

where $N_{max}$(I) is the maximum value of the I-th symbol and $N_{min}$(I) is the minimum value of the I-th symbol.

Further, in the above-described aspect of the invention, after the SN ratio is calculated at the SN-ratio calculating step and the input signal is created at the input-signal creating step, the input signal is subjected to an FFT process.

Further, according to still another aspect of the invention, a digital television receiving apparatus includes an SN-ratio calculating unit that calculates an SN ratio of each of received signals that are OFDM modulated signals diversity-received by L number of branches, wherein the SN-ratio calculating unit calculates the SN ratio as follows,

X(n) that is defined by the following equation is calculated first

$$X_{(n)} = \sum_{i=n-N}^{n} \left| S(I, i + Nu) - S(I, i) \right| \tag{9}$$

where S(I, i) is an output of a signal that is an i-th sample of an I-th symbol of the received signal, n is a sample number of an n-th sample of the I-th symbol, N is an integer smaller than Ng that is the number of samples of the guard interval of the I-th symbol, and $N_u$ is the number of samples of a valid symbol, and then SN(I) that is the SN ratio is calculated using the following equation

$$SN(I) = \frac{N_{\max}(I) - N_{\min}(I)}{N_{\min}(I)} \tag{10}$$

where $N_{max}$(I) is the maximum value of the I-th symbol and $N_{min}$(I) is the minimum value of the I-th symbol.

Further, according to a comparative example, a diversity receiving device that demodulates received signals that are OFDM modulated signals diversity-received by a plurality of branches, the diversity receiving device includes a plurality of signal extracting units of each of the branches that extracts different frequency bands from the orthogonally-demodulated received signals, a particular-frequency noise estimating unit that calculates X(n) that is defined by the following equation

$$X_{(n)} = \sum_{i=n-N}^{n} \left| S(I, i + Nu) - S(I, i) \right| \tag{11}$$

where S(I, i) is an output of a signal that is an i-th sample of an I-th symbol of the received signal, n is a sample number of an n-th sample of the I-th symbol, N is an integer smaller than Ng that is the number of samples of the guard interval of the I-th symbol, and $N_u$ is the number of samples of a valid symbol, and then calculates the minimum value $N_{min}$ of the I-th symbol of X(n) on the frequency band basis, calculates differences between the minimum values $N_{min}$ of adjacent frequency bands, and estimates noise of a particular frequency in the received signal using distribution of the differences; and a particular-frequency noise correcting unit that corrects the received signal using the noise of the particular frequency that is estimated by the particular-frequency noise estimating unit.

Further, according to another comparative example, a diversity receiving device that demodulates received signals that are OFDM modulated signals diversity-received by a plurality of branches, the diversity receiving device includes a plurality of signal extracting units of each of the branches that extracts different frequency bands from the orthogonally-demodulated received signals, a particular-frequency noise estimating unit that calculates an SN ratio of each of the frequency bands of the received signals that are extracted by the signal extracting units, calculates differences between the SN ratios of adjacent frequency bands, and estimates noise of a particular frequency of the received signals using distribution of the differences, and a particular-frequency noise correcting unit that corrects the received signal using the noise of the particular frequency that is estimated by the particular-frequency noise estimating unit.

Further, in the above-described comparative example, the particular-frequency noise correcting unit corrects the received signal so that the differences that are calculated by the particular-frequency noise estimating unit are aligned on a line in the distribution.

Further, according to still another comparative example, a diversity receiving method for demodulating received signals that are OFDM modulated signals diversity-received by a plurality of branches, the diversity receiving method includes a plurality of signal extracting steps of extracting, in each of the branches, different frequency bands from the orthogonally-demodulated received signals, a particular-frequency noise estimating step of calculating X(n) that is defined by the following equation,

$$X_{(n)} = \sum_{i=n-N}^{n} \left| S(I, i + Nu) - S(I, i) \right| \qquad (12)$$

where S(I, i) is an output of a signal that is an i-th sample of an I-th symbol of the received signal, n is a sample number of an n-th sample of the I-th symbol, N is an integer smaller than Ng that is the number of samples of the guard interval of the I-th symbol, and $N_u$ is the number of samples of a valid symbol, calculating the minimum value $N_{min}$ of the I-th symbol of X(n) on the frequency band basis, calculating differences between the minimum values $N_{min}$ of adjacent frequency bands, and estimating noise of a particular frequency in the received signal using distribution of the differences; and a particular-frequency noise correcting step of correcting the received signal using the noise of the particular frequency that is estimated at the particular-frequency noise estimating step.

Further, according to still another comparative example, a diversity receiving method for demodulating a received signal that is an OFDM modulated signal diversity-received by a plurality of branches, the diversity receiving method includes a signal-extracting step of extracting, in each of the branches, different frequency bands from the orthogonal-modulated received signal, a plurality of signal extracting steps of extracting, in each of the branches, different frequency bands from the orthogonally-demodulated received signals, a particular-frequency noise estimating step of calculating an SN ratio of each of the frequency bands of the received signals that are extracted at the signal extracting steps, calculating differences between the SN ratios of adjacent frequency bands, and estimating noise of a particular frequency of the received signals using distribution of the differences, and a particular-frequency noise correcting step of correcting the noise of the particular frequency in the received signals so that the differences that are calculated at the particular-frequency noise estimating step are aligned on a line in the distribution.

EFFECT OF THE INVENTION

With a diversity receiving device, a diversity receiving method, and a digital television receiving apparatus according to the present invention, a simple first-order calculation using S(I, i+$N_u$) and S(I, i) is used, which leads to scale reduction, simplification, and calculating-time reduction of the logical circuit that calculates SN ratios.

Moreover, with the diversity receiving device, the diversity receiving method, and the digital television receiving apparatus according to the present invention, the effect of pulse noise is eliminated and therefore the SN ratio affected only by AWGN is calculated.

Furthermore, with the diversity receiving device, the diversity receiving method, and the digital television receiving apparatus according to the present invention, the SN ratio of an input signal that is created by combining diversity-received signals is increased as much as possible, which enhances the quality of the input signal.

Moreover, with the diversity receiving device, the diversity receiving method, and the digital television receiving apparatus according to the present invention, the effect of delayed waves and preceding ghost waves is suppressed as much as possible, which facilitates demodulation of the input signal that is created by combining diversity-received signals.

Furthermore, with the diversity receiving device and the diversity receiving method according to the present invention, noise of a particular frequency in the received signals is eliminated, which leads to a preferable receiving result.

Moreover, with the diversity receiving device and the diversity receiving method according to the present invention, noise of a particular frequency in the received signals is eliminated in a simple manner using the property of the noise of the particular frequency in the received signals, which leads to a preferable receiving result.

BRIEF DESCRIPTION OF DRAWINGS

FIG. 1 is a functional block diagram of the configuration of a diversity receiving device according to a first embodiment.
FIG. 2 is a schematic diagram that explains an SN-ratio calculating method according to the first embodiment.
FIG. 3 is a schematic diagram that explains the SN-ratio calculating method according to the first embodiment.
FIG. 4 is a schematic diagram that explains a pulse-noise detecting method according to the first embodiment.
FIG. 5 is a functional block diagram of the configuration of a diversity receiving device according to a second embodiment.
FIG. 6 is a functional block diagram of the configuration of a multipath detecting unit according to the second embodiment.
FIG. 7 is a schematic diagram that explains a multipath detecting method according to the second embodiment.
FIG. 8 is a functional block diagram of the configuration of a diversity receiving device according to a third embodiment.
FIG. 9 is a schematic diagram that explains an SN-ratio calculating method according to the third embodiment.
FIG. 10-1 is graphs of an example in which no effect of a particular frequency noise is present according to the third embodiment.
FIG. 10-2 is graphs that explain a method of eliminating the effect of the particular frequency noise according to the third embodiment.
FIG. 10-3 is a graph of the particular frequency noise that is estimated in the third embodiment.
FIG. 11 is a block diagram of the configuration of a digital television receiving apparatus that includes the diversity receiving device according to any one of the first to the third embodiments.

EXPLANATIONS OF LETTERS OR NUMERALS

| | |
|---|---|
| 10, 10a, 10b, 10c | Diversity receiving device |
| 100a, 100b | First branch |
| 200a, 200b | Second branch |
| 300a, 300b | Third branch |
| 400a, 400b | Fourth branch |
| 101 | Tuner unit |
| 102 | AD converting unit |
| 103 | Orthogonal demodulating unit |
| 104 | Phase-difference correcting unit |
| 105, ..., 405 | SN-ratio calculating unit |
| 105a | First low-pass filtering unit |
| 105b | Second low-pass filtering unit |
| 105c | Third low-pass filtering unit |
| 105d | Fourth low-pass filtering unit |
| 105e | Fifth low-pass filtering unit |
| 106, ..., 406 | Multipath detecting unit |
| 106a1 | Multipath-noise calculating unit |
| 106b1 | Guard-interval-position identifying unit |
| 106a | First SN-ratio calculating unit |
| 106b | Second SN-ratio calculating unit |
| 106c | Third SN-ratio calculating unit |
| 106d | Fourth SN-ratio calculating unit |
| 106e | Fifth SN-ratio calculating unit |
| 107 | Particular-frequency noise correcting unit |
| 108, ..., 408 | Antenna |
| 500 | Combining unit |
| 600 | FFT unit |
| 700 | Demodulating unit |
| 800 | Digital television receiving apparatus |
| 801 | Backend device |
| 801a | DSP |

| 801b | Video buffer |
| 801c | DAC+VCXO |

BEST MODE(S) FOR CARRYING OUT THE INVENTION

Diversity receiving devices and diversity receiving methods according to exemplary embodiments of the present invention are described in detail below with reference to the accompanying drawings. An SN ratio, hereinafter, is a Signal to Noise Ratio. When a carrier wave is used as the signal, the SN ratio is called "Carrier to Noise Ratio (CN ratio)". Especially, when the signal is a digital signal, it is called "CN ratio". Diversity receiving devices according to first to third embodiments as follows are MRC diversity receiving devices that combine diversity-received signals by Maximum Ratio Combining.

First Embodiment

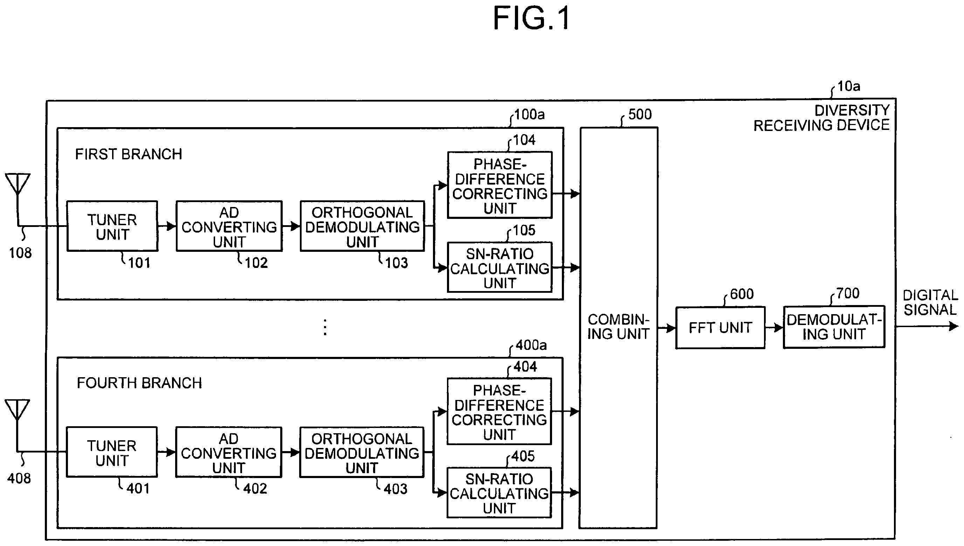

The configuration of the diversity receiving device according to the first embodiment is described below. FIG. 1 is a functional block diagram of the configuration of the diversity receiving device according to the first embodiment. As shown in the figure, a diversity receiving device 10a according to the first embodiment has, for example, four branches that include a first branch 100a, a second branch 200a (not shown), a third branch 300a (not shown), and a fourth branch 400a to receive OFDM modulated signals in the diversity scheme. The first to the fourth branches 100a to 400a have the same configuration; therefore, only the configuration of the first branch 100a is described below as the representative. The number of branches is not limited to four, i.e., the first to the fourth branches 100a to 400a, and can take any number that is larger than one.

In the first branch 100a, a tuner unit 101 receives an OFDM modulated signal via an antenna 108, and an AD converting unit 102 converts the received signal from an analog signal into a digital signal. An orthogonal demodulating unit 103 detects a complex baseband signal that is a complex of an I channel and a Q channel from the digital OFDM modulated signal by shifting the phase by a quarter.

The complex baseband signal that is detected by the orthogonal demodulating unit 103 is input to both a phase-difference correcting unit 104 and an SN-ratio calculating unit 105.

The phase-difference correcting unit 104 calculates a phase-difference correcting signal using delayed waves and ghost waves included in the complex baseband signal to correct a phase difference in the complex baseband signal and sends, after correcting the complex baseband signal using the phase-difference correcting signal, the corrected complex baseband signal to a combining unit 500 at a subsequent stage.

The SN-ratio calculating unit 105 is an SN-ratio calculating unit that calculates, in the first branch 100a, the SN ratio of the received signal. The SN ratio is calculated as follows. X(n) that is defined by the following equation is calculated first, in which S(I, i) is an output of a signal that is an i-th sample of an I-th symbol of the received signal, n is the sample number of an n-th sample of the I-th symbol, N is a width of a moving average indicative of the number of samples smaller than Ng that is the number of samples of the guard interval of the I-th symbol, $N_u$ is the number of samples of the valid symbol.

$$N = \frac{Ng}{8} \qquad\qquad (13)$$

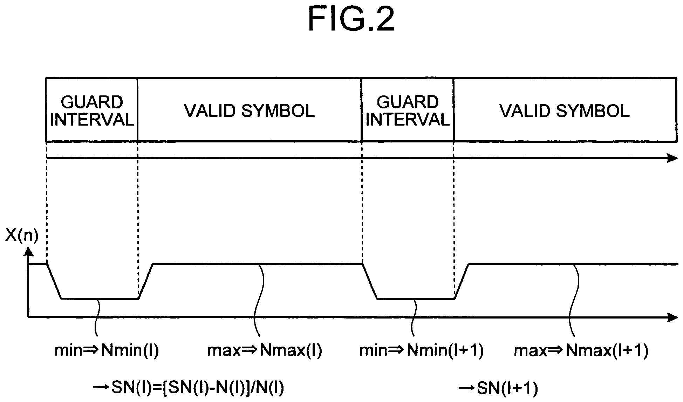

SN(I) that is the SN ratio of the I-th symbol is calculated using the following equation, in which $N_{max}(I)$ is the maximum value of the I-th symbol and $N_{min}(I)$ is the minimum value of the I-th symbol. The outline of calculation of the SN(I) is shown in FIG. 2.

$$W_j = \frac{SN_j^2}{\sum_{k=1}^{4} SN_k^2} \qquad\qquad (14)$$

In this manner, because the minimum value $N_{min}(I)$ is the denominator of the equation for calculating SN(I), the SN ratio that is affected only by Additive White Gaussian Noise (AWGN) and free from the effect of multipath is calculated. This enables elimination of, especially, the effect of preceding ghosts that arrive earlier than the dominant waves.

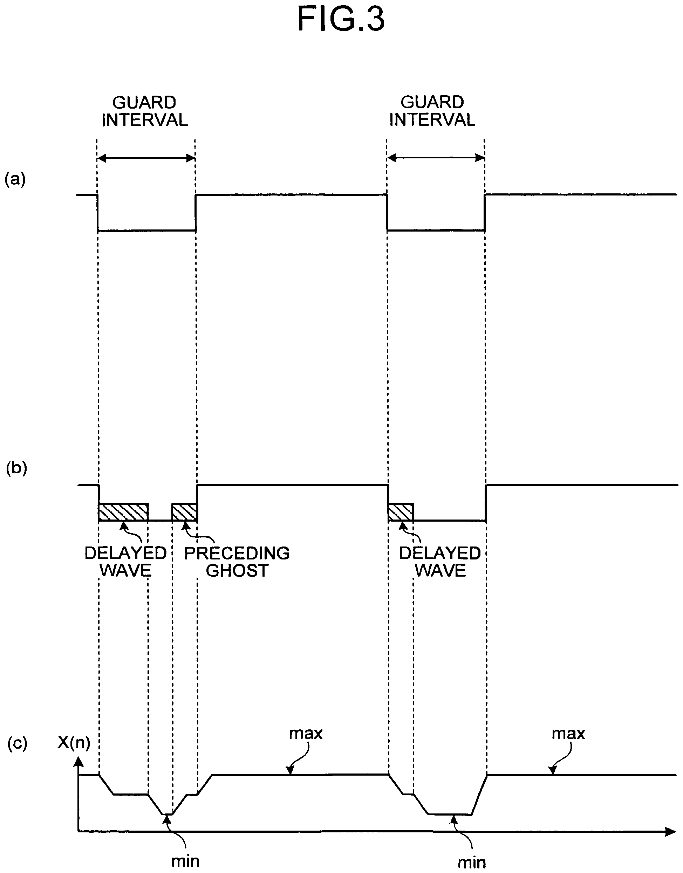

If, for example, multipath is not present, the waveform of each of the sample i of S(I, i+$N_u$)-S(I, i) appears as shown in FIG. 3(a). In contrast, if multipath is present, the waveform of S(I, i+N$_u$)-S(I, i) appears as shown in FIG. 3(b) due to the effect of delayed waves and ghost waves onto the guard intervals.

To calculate, in the conditions shown in FIG. 3(b), the SN ratio free from the effect of multipath, it is necessary to calculate the moving average within the narrow width of S(I, i+N$_u$)-S(I, i) and the minimum value within a single symbol; therefore, the method described in the first embodiment is proposed. The minimum value within a single symbol of X(n) that is calculated using the above-described Equation (1) is shown in FIG. 3(c) as "min" and the maximum value is shown in FIG. 3(c) as "max".

As mentioned above, in the method described in the first embodiment, both the numerator and the denominator of the equation for calculating the SN ratio are calculated based on the theory using the same equation for calculating X(n); therefore, it is possible to reduce the scale of the logic circuit that calculates the SN ratio. In the conventional calculation for the SN ratio, in contrast, "S" and "N" of the SN ratio, i.e., the output of the signal and the noise output are needed to be calculated individually and moreover a square (second-order) calculation using S(I, i+N$_u$)-S(I, i) and S(I, i) is needed to calculate these values; therefore, a large computing amount is needed. This leads to a logical circuit having a larger scale or a more complicated configuration.

A large computing amount leads to a long computing time. Use of the logical circuit that performs the calculating manner described in the first embodiment leads to scale reduction, simplification, and calculating-time reduction of the logical circuit, because the simple first-order calculation using S(I, i+N$_u$)-S(I, i) and S(I, i) is performed.

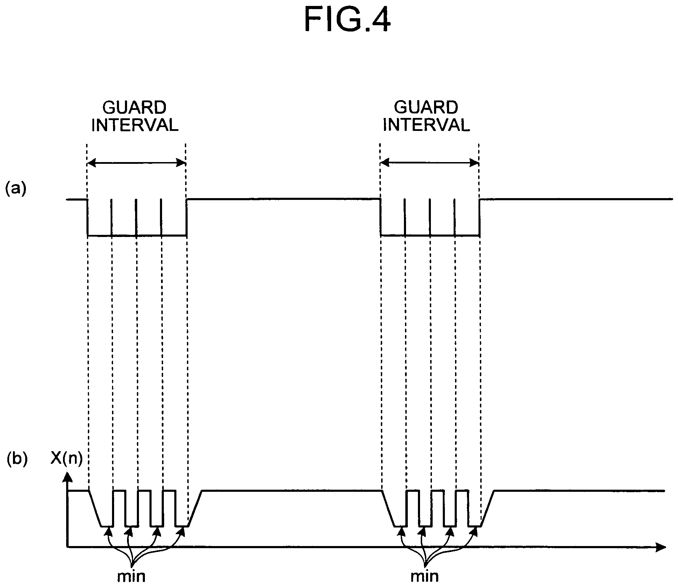

If pulse noise is present, the waveform of S(I, i+N$_u$)-S(I, i) appears as shown in FIG. 4(a). For example, N is defined by the following equation:

$$SI = \sum_{j=1}^{4} (Sj + Nj) \times Wj \qquad\qquad (15)$$

When N is defined in this manner, if the interval between the pulse noises is Ng/8 or longer, the waveform of X(n) appears as shown in FIG. 4(b). Therefore, when the interval between the pulse noises is Ng/8 or longer, because the minimum value "min" within a single symbol of X(n) is the denominator of the equation for calculating the SN ratio, the SN ratio that is affected only by AWGN and free from the effect of the pulse noises is calculated.

In this manner, both the complex baseband signal after the phase difference is corrected using the phase-difference correcting signal and the SN ratio of the complex baseband signal that is received by the first branch 100a are sent from the first branch 100a to the combining unit 500. In the same manner, both the complex baseband signal after the phase difference is corrected using the phase-difference correcting signal and the SN ratio of the complex baseband signal that is received by each branch are sent from the second to the fourth branches 200a to 400a to the combining unit 500.

The combining unit 500 weights the complex baseband signals that are corrected using the phase-difference correcting signals by the branches depending on the respective SN ratios and combines the weighted signals, thereby creating the input signal.

A weighting coefficient W$_j$ that is used for weighting the complex baseband signal of a j-th branch (1≤j≤4) is calculated using the following equation, in which SN$_j$ is the SN ratio of the j-th branch:

$$SN_{post} = \frac{W_1 \times S_1 + W_2 \times S_2 + W_3 \times S_3 + W_4 \times S_4}{\sqrt{(W_1 \times N_1)^2 + (W_2 \times N_2)^2 + (W_3 \times N_3)^2 + (W_4 \times N_4)^2}} \qquad\qquad (16)$$

An input signal SI is created using the weighting coefficient W$_j$ by the following equation. That is, SI is calculated using the following equation, in which S$_j$ is an output of the signal from the j-th branch and N$_j$ is a noise output:

$$X_{(n)} = \sum_{i=n-N}^{n} \left| S(I, i + Nu) - S(I, i) \right| \qquad\qquad (17)$$

SN$_{post}$ that is the SN ratio after the combining is calculated using the following equation. The weighting coefficient W$_j$ is calculated using the above Equation (12) so as to set SN$_{post}$ to a maximum value. This enhances the quality of the input signal SI after the combining to a high level.

$$X_{(n)} = \sum_{i=n-N}^{n} \left| S(I, i + Nu) - S(I, i) \right| \qquad (18)$$

An FFT unit 600 performs a Fast Fourier Transform process on the input signal SI that is created by the combining unit 500. The Fast Fourier Transformed SI is demodulated by a demodulating unit 700 and the digital signal is then output.

Second Embodiment

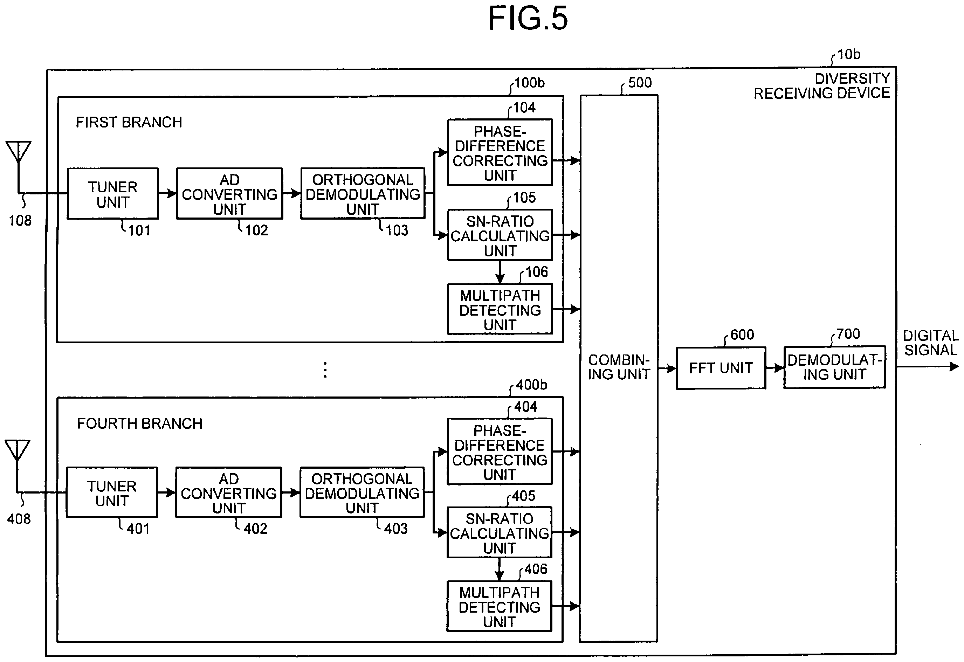

The configuration of a diversity receiving device according to the second embodiment is described below. FIG. 5 is a functional block diagram of the configuration of the diversity receiving device according to the second embodiment. As shown in the figure, a diversity receiving device 10b according to the second embodiment has, for example, four branches that include a first branch 100b, a second branch 200b, a third branch 300b, and a fourth branch 400b to receive OFDM modulated signals in the diversity scheme, as the diversity receiving device 10a according to the first embodiment has the four branches. The first to the fourth branches 100b to 400b have the same configuration; therefore, only the configuration of the first branch 100b is described below as the representative. The number of branches is not limited to four, i.e., the first to the fourth branches 100b to 400b, and can take any number that is larger than one.

The configuration of the first branch 100b is described below only about a part that is different from that of the diversity receiving device 10a according to the first embodiment. The complex baseband signal that is detected by the orthogonal demodulating unit 103 of the first branch 100b is input to each of the phase-difference correcting unit 104, the SN-ratio calculating unit 105, and a multipath detecting unit 106, in parallel.

The SN-ratio calculating unit 105 of the first branch 100b calculates the SN ratio of the complex baseband signal that is received from the orthogonal demodulating unit 103. The manner of calculating the SN ratio is the same as the SN-ratio calculating manner performed by the SN-ratio calculating unit 105 in the first embodiment. The SN ratio calculated by the SN-ratio calculating unit 105 is sent to both the combining unit 500 at the subsequent stage and the multipath detecting unit 106.

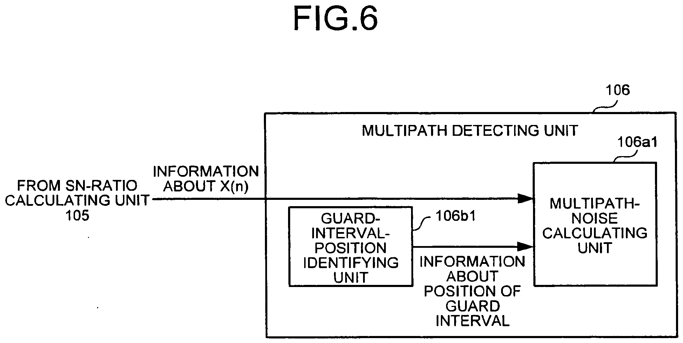

The details of the multipath detecting unit 106 are shown in FIG. 6. A guard-interval-position identifying unit 106b1 of the multipath detecting unit 106 identifies a period of the guard interval of the I-th symbol using $X_{Ng}(n)$ that is defined by the above Equation (6). It means that, in X(n) expressed by Equation (9) in the first embodiment, the width of the moving average N corresponds to the number of samples of the guard interval.

A multipath-noise calculating unit 106a1 of the multipath detecting unit 106 calculates the multipath noise using information about X(n) received from the SN-ratio calculating unit 105 and information about a position of the guard interval received from the guard-interval-position identifying unit 106b1.

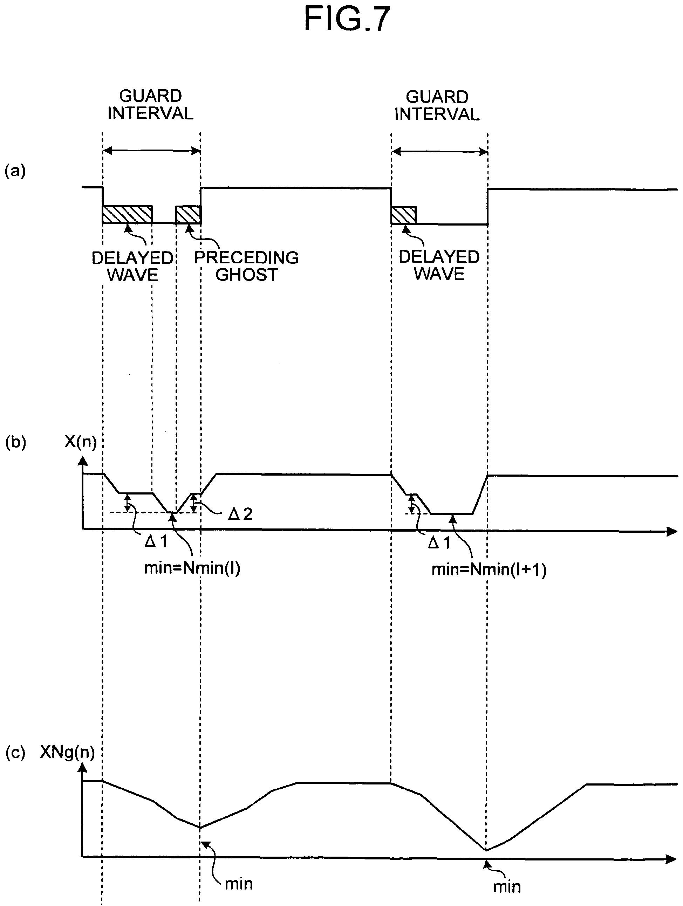

More particularly, if multipath is present, the waveform of $S(I, i+N_u)-S(I, i)$ appears as shown in FIG. 7(a). If the width of the moving average N is Ng/8, the graph of X(n) appears as shown in FIG. 7(b). That is, if multipath noise caused by the delayed waves is present, X(n) keeps equal to or larger than a predetermined value from the start position of the guard interval in the time axial direction. If multipath noise caused by the preceding ghosts is present, X(n) keeps equal to or larger than the predetermined value from the end position of the guard interval in the reverse direction with respect to the time axis.

The end position of the period of the guard interval identified by the guard-interval-position identifying unit 106b1 in the above conditions is the position of the minimum value "min" of $X_{Ng}(n)$ (see FIG. 7(c)). The identification of the end position enables estimation of the position of the guard interval. Differences $\Delta_1$ and $\Delta_2$ between a value of X(n) within the period of the guard interval when affected by the multipath noise and the value $N_{min}(I)$ are calculated (see FIG. 7(b)). If the differences are equal to or larger than a predetermined threshold, the combining unit 500 at the subsequent stage is notified of the fact.

If the multipath-noise calculating unit 106a1 notifies the combining unit 500 that the differences $\Delta1$, and $\Delta_2$ are equal to or larger than the predetermined threshold, the combining unit 500 adjusts the weighting coefficient, which is used to create the input signal SI by combining the complex baseband signals that are the products of the received signals diversity-received by the first branch 100b, to a value equal to or smaller than a predetermined value.

More particularly, the combining unit 500 adjusts the weighting coefficient $W_j$ that is calculated using Equation (12) described in the first embodiment to a value equal to or smaller than the predetermined value or decreases the coefficient $W_j$ to a predetermined percentage. In this manner, the multipath is detected, and the weighting is performed appropriately depending on the magnitude of the delayed waves and the preceding ghost waves (DU ratio, Desired Signal to Undesired Signal Ratio). This suppresses the effect of the delayed waves and the preceding ghost waves as much as possible and facilitates demodulation of the input signal SI after the combining performed by the combining unit 500.

The multipath noise can be corrected by the phase-difference correcting unit 104 in some cases; however, in cases where the DU ratio is too large, the multipath noise cannot be corrected sufficiently or it is impossible to correct the multipath noise. In those cases, the multipath detecting unit 106 (especially, the multipath-noise calculating unit 106a1) decreases the weighting coefficient of the complex baseband signal so that the effect of the delayed waves and the preceding ghost waves is suppressed as much as possible, which facilitates the demodulation of the input signal SI after the combining performed by the combining unit 500.

Third Embodiment

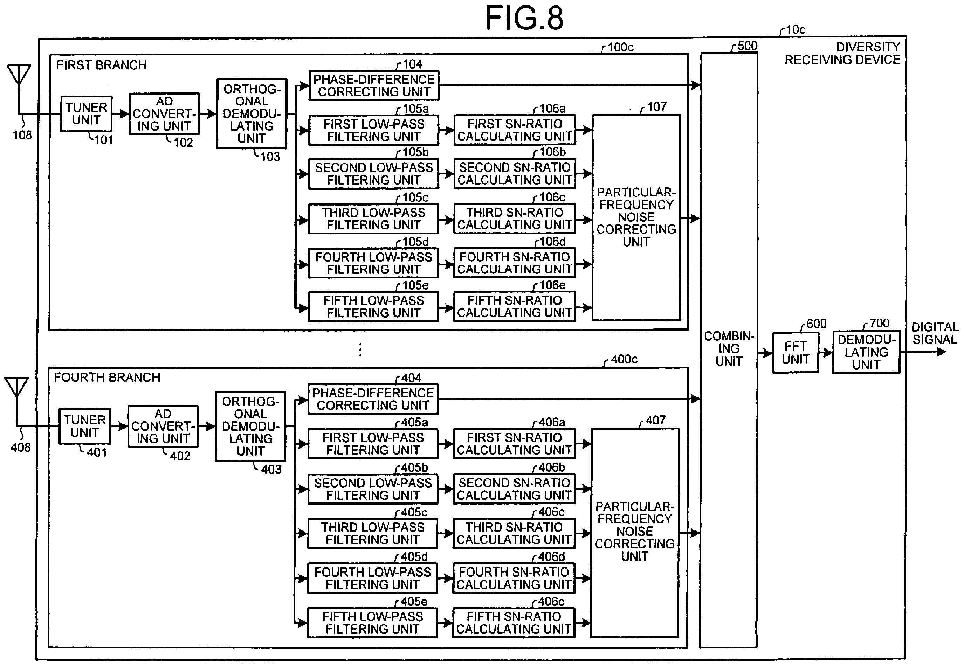

The configuration of a diversity receiving device according to the third embodiment is described below. FIG. 8 is a functional block diagram of the configuration of the diversity receiving device according to the third embodiment. As shown in the figure, a diversity receiving device 10c according to the third embodiment has, for example, four branches that include a first branch 100c, a second branch 200c (not shown), a third branch 300c (not shown), and a fourth branch 400c to receive OFDM modulated signals in the diversity scheme. The first to the fourth branches 100c to 400c have the same configuration; therefore, only the configuration of the first branch 100c is described below as the representative. The number of branches is not limited four, i.e., the first to the fourth branches 100c to 400c, and can take any number that is larger than one.

In the first branch 100c, the tuner unit 101 receives an OFDM modulated signal via the antenna 108, and the AD converting unit 102 converts the received signal from an analog signal into a digital signal. The orthogonal demodulating unit 103 detects a complex baseband signal that is a complex of an I channel and a Q channel from the digital OFDM modulated signal by shifting the phase by a quarter.

The complex baseband signal that is detected by the orthogonal demodulating unit 103 is input to each of the phase-difference correcting unit 104, a first low-pass filtering unit 105a, a second low-pass filtering unit 105b, a third low-pass filtering unit 105c, a fourth low-pass filtering unit 105d, and a fifth low-pass filtering unit 105e, in parallel. The number of low-pass filters is not limited five, i.e., the first to the fifth low-pass filtering units 105a to 105e, and can take any number that is larger than one. It is allowable to use band-pass filters instead of low-pass filters.

The phase-difference correcting unit 104 calculates a phase-difference correcting signal using delayed waves and ghost waves included in the complex baseband signal to correct a phase difference in the complex baseband signal and sends, after correcting the complex baseband signal using the phase-difference correcting signal, the corrected complex baseband signal to the combining unit 500 at the subsequent stage.

The first low-pass filtering unit 105a cuts off a signal having a first particular frequency of the complex baseband signal and sends it to a first SN-ratio calculating unit 106a. The second low-pass filtering unit 105b cuts off a signal having a second particular frequency of the complex baseband signal and sends it to a second SN-ratio calculating unit 106b; the third low-pass filtering unit 105c cuts off a signal having a third particular frequency of the complex baseband signal and sends it to a third SN-ratio calculating unit 106c; the fourth low-pass filtering unit 105d cuts off a signal having a fourth particular frequency of the complex baseband signal and sends it to a fourth SN-ratio calculating unit 106d; and the fifth low-pass filtering unit 105e cuts off a signal having a fourth particular frequency of the complex baseband signal and sends it to a fifth SN-ratio calculating unit 106e. It is noted that the first particular frequency<the second particular frequency<the third particular frequency<the fourth particular frequency<the fifth particular frequency.

The first SN-ratio calculating unit 106a to the fifth SN-ratio calculating unit 106e are a plurality of SN-ratio calculating units provided to the first low-pass filtering unit 105a to the fifth low-pass filtering unit 105e, respectively in the first branch 100c. The SN ratios are calculated on the low-pass filtering unit basis using the guard interval of the time signal from the complex baseband signals after the cutting-off by the low-pass filtering units.

The SN ratios are calculated on the low-pass filtering unit basis as follows. X(n) that is defined by the following equation is calculated first, in which S(l, i) is an output of a signal that is an i-th sample of an l-th symbol of the received signal, n is the sample number of an n-th sample of the l-th symbol, N is a width of a moving average indicative of the number of samples smaller than Ng that is the number of samples of the guard interval of the l-th symbol, $N_u$ is the number of samples of the valid symbol:

$$X_{(n)} = \sum_{i=n-N}^{n} \left| S(I, i + Nu) - S(I, i) \right| \qquad (19)$$

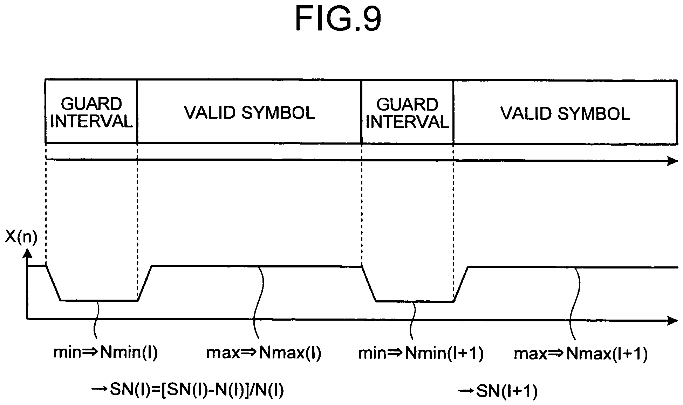

SN(l) that is the SN ratio of the l-th symbol is calculated using the following equation, in which $N_{max}$(l) is the maximum value of the l-th symbol and $N_{min}$(l) is the minimum value of the l-th symbol. $N_{min}$(l) is the noise component of the particular frequency that is cut off by the low-pass filter. The outline of calculation of the SN(l) is shown in FIG. 9.

$$SN(I) = \frac{N_{\max}(I) - N_{\min}(I)}{N_{\min}(I)} \tag{20}$$

The SN ratio can be calculated using a conventional method by the following equation. N(I) is calculated first using the following equation, in which "I" represents the I-th symbol of the received signal as described above.

$$N(I) = \sum_{i=N_0}^{N_0+N_a-1} \left\{ S(I, i + N_u) - S(I, i) \right\}^2 \tag{21}$$

where $0 \leq N_0 \leq N_g - N_a$, $0 < N_a \leq N_g$, and $N_a$ are the number of samples to be added.

Then, S(I) is calculated using the following equation:

$$S(I) = \frac{\sum_{i=N_0}^{N_0+N_a-1} \left\{ S(I, i)^2 + S(I, i + N_u)^2 \right\}}{2} \tag{22}$$

where $0 \leq N_0 \leq N_g - N_a$, $0 < N_a \leq N_g$, and $N_a$ are the number of samples to be added.

SN(I) that is the SN ratio of the I-th symbol of the received signal is calculated by the following equation using N(I) that is calculated using Equation (21) and S(I) that is calculated using Equation (22):

$$SN(I) = \frac{S(I)}{N(I)} = \frac{\sum_{i=N_0}^{N_0+N_a-1} \left\{ S(I, i)^2 + S(I, i + N_u)^2 \right\}}{2 \sum_{i=N_0}^{N_0+N_a-1} \left\{ S(I, i + N_u) - S(I, i) \right\}^2} \tag{23}$$

where $0 \leq N_0 \leq N_g - N_a$, $0 < N_a \leq N_g$, and $N_a$ are the number of samples to be added.

The first branch 100c includes a particular-frequency noise correcting unit 107. The particular-frequency noise correcting unit 107 estimates the noise of the particular frequency using $N_{\min}(I)$ of each particular frequency that is calculated by the first SN-ratio calculating unit 106a to the fifth SN-ratio calculating unit 106e using the above Equation (18) and eliminates the effect thereof so that the input signal, which is created by combining the weighted signals by the combining unit 500 at the subsequent stage, can be demodulated easily.

For example, if the first low-pass filtering unit 105a is abbreviated as LP1, the second low-pass filtering unit 105b is abbreviated as LP2, the third low-pass filtering unit 105c is abbreviated as LP3, the fourth low-pass filtering unit 105d is abbreviated as LP4, and the fifth low-pass filtering unit 105e is abbreviated as LP5, "$N_{\min}(I)$ of the complex baseband signal after the cutting-off by LP1"<"$N_{\min}(I)$ of the complex baseband signal after the cutting-off by LP2"<"$N_{\min}(I)$ of the complex baseband signal after the cutting-off by LP3"<"$N_{\min}(I)$ of the complex baseband signal after the cutting-off by LP4"<"$N_{\min}(I)$ of the complex baseband signal after the cutting-off by LP5" and the values of $N_{\min}(I)$ are in proportional relations are then satisfied.

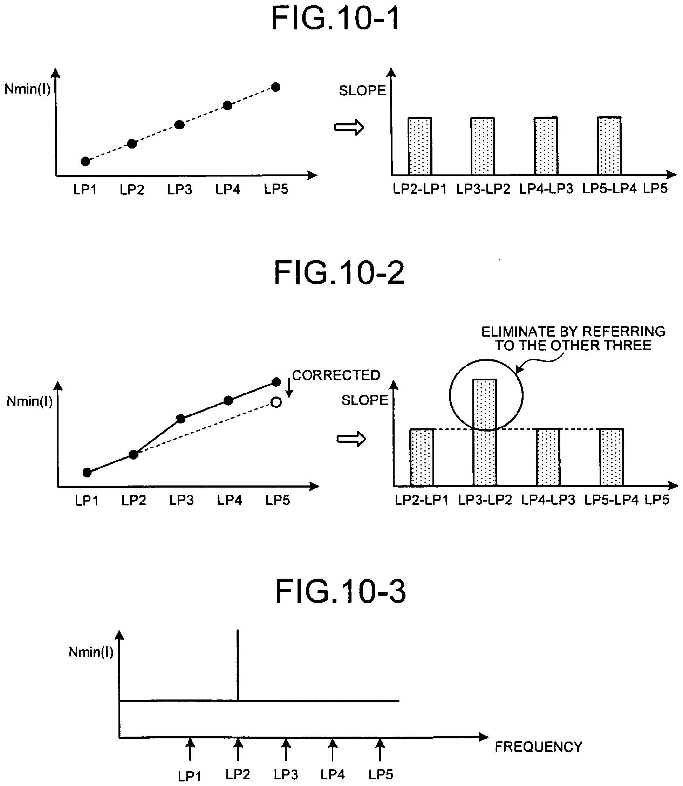

In other words, if no particular frequency noise is present in the complex baseband signals, as shown in FIG. 10-1, because a difference LP2-LP1 between "$N_{\min}(I)$ of the complex baseband signal after the cutting-off by LP2" and "$N_{\min}(I)$ of the complex baseband signal after the cutting-off by LP1", a difference LP3-LP2 between "$N_{\min}(I)$ of the complex baseband signal after the cutting-off by LP2" and "$N_{\min}(I)$ of the complex baseband signal after the cutting-off by LP2", a difference LP4-LP3 between "$N_{\min}(I)$ of the complex baseband signal after the cutting-off by LP4" and "$N_{\min}(I)$ of the complex baseband signal after the cutting-off by LP3", a difference LP5-LP4 between "$N_{\min}(I)$ of the complex baseband signal after the cutting-off by LP5" and "$N_{\min}(I)$ of the complex baseband signal after the cutting-off by LP4" are the same value, the slope of the graph that is drawn by plotting the points of $N_{\min}(I)$ is fixed.

In contrast, if a particular frequency noise is present in the complex baseband signals, as shown in FIG. 10-2, the values of LP2-LP1, LP3-LP2, LP4-LP3, and LP5-LP4 are variable; therefore, the slope of the graph that is drawn by plotting the points of $N_{\min}(I)$ is variable. In the example shown in FIG. 10-2, because LP3-LP2 is larger than the other differences, the slope of the straight line between $N_{\min}(I)$ of LP2 and $N_{\min}(I)$ of LP3 is larger than the slopes of the straight lines between the points of $N_{\min}(I)$ of the other low-pass filters. Due to this, it is estimated as shown in FIG. 10-3 that a particular frequency noise is present in the complex baseband signal after the cutting-off by the second low-pass filtering unit 105b.

The particular-frequency noise correcting unit 107 corrects the particular frequency noise in the complex baseband signal that is estimated in the above manner. For example, the excessive value of LP3-LP2 shown in FIG. 10-2 can be eliminated from the other values of LP2-LP1, LP4-LP3, and LP5-LP4. The particular frequency noise in the complex baseband signal is corrected using the value of LP3-LP2 after the excessive part is eliminated in this manner.

The particular-frequency noise correcting unit 107 calculates the SN ratio after the particular frequency noise is eliminated using the above Equation (20) or the above Equation (23) and sets it as the SN ratio of the first branch 100C. Both the complex baseband signal after the particular frequency noise is corrected (eliminated) and the SN ratio after the particular frequency noise is eliminated are sent to the combining unit 500 at the subsequent stage.

As mentioned above, the complex baseband signal after the phase difference is corrected using the phase-difference correcting signal and the SN ratio of the complex baseband signal after the particular frequency noise is corrected are sent from the first branch 100c to the combining unit 500. Moreover, the complex baseband signal after the phase difference is corrected using the phase-difference correcting signal and the SN ratio of the complex baseband signal after the particular frequency noise is corrected at each branch are sent from the second to the fourth branches 200c to 400c to the combining unit 500 in the same manner.

The combining unit 500 weights the complex baseband signals that are corrected using the phase-difference correcting signals by the branches depending on the respective SN ratios and combines the weighted signals, thereby creating the input signal.

The FFT unit 600 performs a Fast Fourier Transform process on the input signal that is created by the combining unit 500. The Fast Fourier Transformed SI is demodulated by the demodulating unit 700 and the digital signal is then output.

Although, in the third embodiment, the particular frequency noise is eliminated using the frequency-based distribution of the minimum values $N_{min}(I)$ in the I-th symbol of the received signal that is cut off into frequency-based segments, the configuration is not limited thereto. It is allowable to use the SN ratio SN(I) instead of $N_{min}(I)$. In this case, an increase of the SN ratio to the frequency-based segment is a reflection of the frequency property of S(I). If the frequency property of S(I) has been grasped in advance, the particular frequency noise of the received signal can be corrected by calculating the difference using the frequency property.

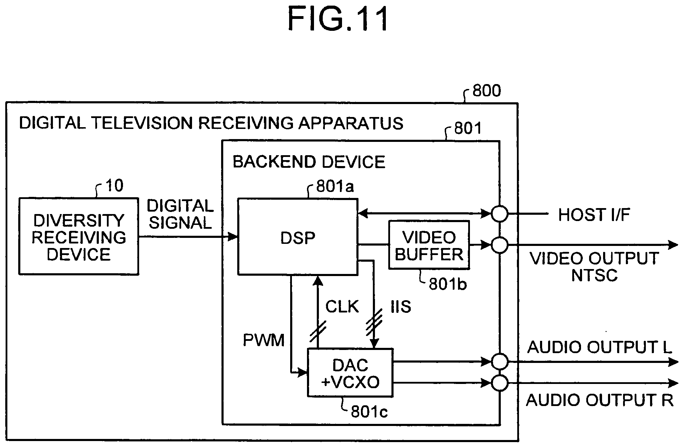

An example in which the diversity receiving devices shown in FIGS. 1, 5, and 8 are used in a digital television receiving apparatus is described below. FIG. 11 is a block diagram of the example in which the diversity receiving device shown in FIG. 8 is used in the digital television receiving apparatus.

As shown in the figure, in a digital television receiving apparatus 800, a digital signal based on a received wave is input from a diversity receiving device 10 to a backend device 801. The backend device 801 includes a DSP (Digital Signal Processor) 801a, a video buffer 801b, and a DAC (Digital to Analog Converter)+VCXO (Voltage Controlled Xtal Oscillator) 801c. The DAC is a digital-to-analog converter circuit that converts a digital signal into an analog signal. The VCXO is a crystal oscillator that can change the frequency depending on the voltage. The DAC+VCXO 801c is a digital-to-analog converter circuit that is controlled by a crystal oscillator.

As for the synchronization control and the clock control, various control circuits in the diversity receiving device 10 and the DSP 801a are controlled by the crystal oscillator of the DAC+VCXO 801c via a predetermined IIC (Inter-IC) bus (not shown). The DAC+VCXO 801c receives a synchronization control signal from the DSP 801a via a predetermined IIC bus.

The DSP 801a demodulates a digital video signal based on video compression standards, such as H.264, MPEG (Moving Picture Expert Group) and demodulates a digital audio signal based on audio compression standards, such as AAC (Advanced Audio Coding). Moreover, the DSP 801a controls the backend device 801.

The DSP 801a has an OSD (On-Screen Display) function for controlling an operation screen of the digital television receiving apparatus 800 appearing on a predetermined display. The DSP 801a encodes the video data and performs Pulse Width Modulation (PWM) with the audio data.

The DSP 801a is connected to a host computer via a predetermined interface. The host computer displays, by the above-described OSD function, an operation screen for selection of video and/or audio in the digital television receiving apparatus 800 and sends information about an instruction received via the operation screen to the DSP 801a.

The DSP 801a temporarily loads the encoded video data on the video buffer 801b and sends the data in the form of an analog signal supported by NTSC (National Television Standards Committee) to a display device (not shown) via a predetermined interface. The DSP 801a sends the pulse-width modulated audio data to the DAC+VCXO 801c.

The DAC+VCXO 801c converts the audio data that is received from the DSP 801a from the digital signal into the analog signal, separates it into an L channel and an R channel, and outputs it to a speaker device (not shown) via a corresponding interface.

If the diversity receiving device 10a according to the first embodiment and the diversity receiving device 10b according to the second embodiment are used in the above-described digital television receiving apparatus 800, it is possible to calculate the SN ratio of the received wave using a simpler circuit configuration/process in such a manner that the SN ratio of the input signal that is created by combining the diversity-received signals is set to a maximum value.

Moreover, because the effect of the delayed waves and the preceding ghost waves and the noise of the particular frequency is suppressed as much as possible, the quality of the input signal is enhanced, which makes it possible to display clear image and output clear voices using the received waves and facilitate the demodulation of the input signal that is created by combining the diversity-received signals.

Moreover, use of the diversity receiving device 10c according to the third embodiment in the above-described digital television receiving apparatus 800 enables eliminating the noise of the particular frequency contained in the received wave on the received signal level basis, which enables displaying of clear image and outputting of clear voices based on the received waves.

It is allowable to implement a combination of the above-described first to the third embodiments. The present invention is not limited to the first embodiment, the second embodiment, and the third embodiment. The present invention can be implemented according to various different embodiments within the scope of the technical idea described in claims. The effects of the first to the third embodiments are not limited thereto.

Of the processes described in the embodiments, all or part of the processes explained as being performed automatically can be performed manually. Similarly, all or part of the processes explained as being performed manually can be performed automatically by a known method. The processing procedures, the control procedures, specific names, various data, and information including parameters described in the embodiments or shown in the drawings can be changed as required unless otherwise specified.

The constituent elements of the device shown in the drawings are merely conceptual, and need not be physically configured as illustrated. The constituent elements, as a whole or in part, can be separated or integrated either functionally or physically based on various types of loads or use conditions.

The process functions performed by the device are entirely or partially realized by the CPU or computer programs that are analyzed and executed by the CPU, or realized as hardware by wired logic.

INDUSTRIAL APPLICABILITY

As set forth hereinabove, a diversity receiving device, a diversity receiving method, and a digital television receiving apparatus according to the present invention are implemented without increasing the complexity of the configuration of a circuit that calculates an SN ratio (or CN ratio), and particularly suitable for increasing the quality of the receiving results using a preferable SN ratio (or CN ratio) that is obtained after effect of delayed waves and ghosts caused by multipath and noise of a particular frequency are eliminated.

**Claims**

1. A diversity receiving device (10a;10b) comprising an SN-ratio calculating unit (105 to 405) that calculates an SN ratio of each of received signals that are OFDM modulated signals diversity-received by L number of branches (100a to 400a), wherein the SN-ratio calculating unit (105 to 405) calculates the SN ratio as follows
X(n) that is defined by the following equation is calculated first

$$X_{(n)} = \sum_{i=n-N}^{n} \left| S(I, i + Nu) - S(I, i) \right| \tag{1}$$

where S(I, i) is an output of a signal that is an i-th sample of an I-th symbol of the received signal, n is a sample number of an n-th sample of the I-th symbol, N is an integer smaller than Ng that is the number of samples of the guard interval of the I-th symbol, and $N_u$ is the number of samples of a valid symbol, and then
SN(I) that is the SN ratio is calculated using the following equation

$$SN(I) = \frac{N_{max}(I) - N_{min}(I)}{N_{min}(I)} \tag{2}$$

where $N_{max}(I)$ is the maximum value of the I-th symbol and $N_{min}(I)$ is the minimum value of the I-th symbol.

2. The diversity receiving device (10a;10b) according to claim 1, wherein the value of N is defined by the following equation

$$N = Ng/8 \tag{3}$$

3. The diversity receiving device (10a;10b) according to claim 1 or 2, further comprising an input-signal weighting/combining unit (500) that creates an input signal by weighting the received signals depending on the SN ratios that are calculated by the SN-ratio calculating unit (105 to 405) and combining weighted received signals, wherein the input-signal weighting/combining unit (500) uses a weighting coefficient $W_j$ that is expressed by the following equation

$$W_j = \frac{SN_j{}^2}{\sum_{k=1}^{L} SN_k{}^2} \tag{4}$$

where $SN_j$ is the SN ratio of the received signal that is diversity-received by a j-th branch, and the input-signal weighting/combining unit (500) creates the input signal using the following equation

$$SI = \sum_{j=1}^{L} (Sj + Nj) \times Wj \tag{5}$$

where SI is the input signal, $S_j$ is an output of the received signal from a branch j ($1 \leq j \leq L$), and $N_j$ is a noise output.

4. The diversity receiving device (10b) according to any of claims 1, 2, and 3, further comprising:

a guard-interval identifying unit (106b1) that identifies a period of a guard interval of the I-th symbol using $X_{Ng}(n)$ that is defined by the following equation

$$X_{Ng}(n) = \sum_{i=n-Ng}^{n} \left| S(I, i+Nu) - S(I, i) \right| \tag{6},$$

and
a multipath-noise calculating unit (106a1) that calculates a difference between the value of X(n) and the value of $N_{min}(l)$, which is caused by multipath noise, of the period of the guard interval that is identified by the guard-interval identifying unit (106b1) and notifies, if the difference is equal to or larger than a predetermined threshold, the input-signal weighting/combining unit (500) of the fact, wherein

if the input-signal weighting/combining unit (500) is notified by the multipath-noise calculating unit (106a1) that the difference is equal to or larger than the predetermined threshold, the input-signal weighting/combining unit (500) sets the weighting coefficient, which is used to create the input signal by combining the received signals that are diversity-received by the branches, to a value equal to or smaller than a predetermined value.

5. A diversity receiving method comprising an SN-ratio calculating step of calculating an SN ratio of each of received signals that are OFDM modulated signals diversity-received by L number of branches (100a to 400a); and an input-signal creating step of creating an input signal by weighting the received signals depending on the SN ratios that are calculated at the SN-ratio calculating step and combining weighted received signals, the method including a demodulating process of demodulating the input signal that is created at the input-signal creating step, wherein the SN-ratio calculating step includes
calculating X(n) that is defined by the following equation

$$X_{(n)} = \sum_{i=n-N}^{n} \left| S(I, i+Nu) - S(I, i) \right| \tag{7}$$

where S(I, i) is an output of a signal that is an i-th sample of an I-th symbol of the received signal, n is a sample number of an n-th sample of the I-th symbol, N is an integer smaller than Ng that is the number of samples of the guard interval of the I-th symbol, and $N_u$ is the number of samples of a valid symbol and, and calculating SN(I) that is the SN ratio using the following equation

$$SN(I) = \frac{N_{max}(I) - N_{min}(I)}{N_{min}(I)} \qquad (8)$$

where $N_{max}(I)$ is the maximum value of the I-th symbol and $N_{min}(I)$ is the minimum value of the I-th symbol.

6. The diversity receiving method according to claim 5, wherein, after the SN ratio is calculated at the SN-ratio calculating step and the input signal is created at the input-signal creating step, the input signal is subjected to an FFT process.

7. The diversity receiving device according to claim 1, wherein the diversity receiving device is a digital television receiving apparatus.

**Patentansprüche**

1. Diversitätsempfangsvorrichtung (10a; 10b), die eine SN-Verhältnisberechnungseinheit (105 bis 405) umfasst, die ein SN-Verhältnis jedes der empfangenen Signale berechnet, die OFDM-modulierte Signale sind, die durch eine Anzahl L von Zweigen (100a bis 400a) diversittätsempfangen werden, wobei die SN-Verhältnisberechnungseinheit (105 bis 405) das SN-Verhältnis wie folgt berechnet: X(n), das durch die folgende Gleichung definiert wird, wird zuerst berechnet:

$$X_{(n)} = \sum_{i=n-N}^{n} \left| S(I, i + Nu) - S(I, i) \right| \qquad (1)$$

wobei S(I, i) eine Ausgabe eines Signals ist, das eine i-te Abtastung eines I-ten Symbols des empfangenen Signals ist, N eine Abtastzahl einer n-ten Abtastung des I-ten Symbols ist, N eine ganze Zahl kleiner als $N_g$ ist, die die Anzahl der Abtastwerte des Schutzintervalls des I-ten Symbols ist und $N_u$ die Anzahl der Abtastwerte eines gültigen Symbols ist und
SN(I), das das SN-Verhältnis ist, wird unter Verwendung der folgenden Gleichung berechnet:

$$SN(I) = \frac{N_{max}(I) - N_{min}(I)}{N_{min}(I)} \qquad (2)$$

wobei $N_{max}(I)$ der maximale Wert des I-ten Symbols ist und $N_{min}(I)$ ist der minimale Wert des I-ten Symbols ist.

2. Diversitätsempfangsvorrichtung (10a; 10b) nach Anspruch 1, wobei der Wert von N durch folgende Gleichung definiert wird:

$$N = Ng/8 \qquad (3).$$

3. Diversitätsempfangsvorrichtung (10a; 10b) nach Anspruch 1 oder 2, die ferner eine Eingangssignal-Gewichtungs-/Kombiniereinheit (500) umfasst, die ein Eingangssignal erzeugt, indem die empfangenen Signale in Abhängigkeit von den SN-Verhältnissen gewichtet werden, die von der SN-Verhältnisberechnungseinheit (105 bis 405) berechnet werden, und gewichtete Empfangssignale miteinander kombiniert werden, wobei
die Eingangssignal-Gewichtungs-/Kombiniereinheit (500) einen Gewichtungskoeffizienten $W_j$ verwendet, der durch folgende Gleichung ausgedrückt wird:

$$W_j = \frac{SN_j^2}{\sum\limits_{k=1}^{L} SN_k^2}$$

(4)

wobei SN$_j$ das SN-Verhältnis des empfangenen Signals ist, das von einem j-ten Zweig diversitätsempfangen wird, und

die Eingangssignal-Gewichtungs-/Kombiniereinheit (500) das Eingangssignal unter Verwendung der folgenden Gleichung erzeugt:

$$SI = \sum\limits_{j=1}^{L} (Sj + Nj) \times Wj$$

(5)

wobei SI das Eingangssignal ist, S$_j$ ein Ausgangssignal des empfangenen Signals von einem Zweig j (1 $\leq$ j $\leq$ L) ist und N$_j$ eine Rauschausgabe ist.

4. Diversitätsempfangsvorrichtung (10b) nach einem der Ansprüche 1,2 und 3, die ferner Folgendes umfasst:

eine Schutzintervall-Identifizierungseinheit (106b1), die eine Periode eines Schutzintervalls des 1-ten Symbols unter Verwendung von X$_{Ng}$(n) identifiziert, das durch die folgende Gleichung definiert wird:

$$X_{Ng}(n) = \sum\limits_{i=n-Ng}^{n} \left| S(I, i+Nu) - S(I, i) \right|$$

(6)

und

eine Multipfad-Rauschberechnungseinheit (106a1), die eine Differenz zwischen dem Wert von X(n) und dem Wert von N$_{min}$(I) berechnet, die durch Multipfad-Rauschen der Periode des Schutzintervalls verursacht wird, das durch die Schutzintervall-Identifizierungseinheit (106b1) identifiziert wird, und wenn die Differenz gleich oder größer als ein vorbestimmter Schwellwert ist, die Eingangssignal-Gewichtungs-/Kombiniereinheit (500) über die Tatsache benachrichtigt, wobei,

wenn die Eingangssignal-Gewichtungs-/Kombiniereinheit (500) durch die Multipfad-Rauschberechnungseinheit (106a1) benachrichtigt wird,

dass die Differenz gleich oder größer als der vorbestimmte Schwellenwert ist, die Eingangssignal-Gewichtungs-/Kombiniereinheit (500) den Gewichtungskoeffizienten, der zur Erzeugung des Eingangssignal verwendet wird, indem die empfangenen Signale kombiniert werden, die durch die Zweige diversitätsempfangen werden, auf einen Wert gleich oder kleiner als ein vorbestimmter Wert einstellt.

5. Diversitätsempfangsverfahren das Folgendes umfasst: einen SN-Verhältnisberechnungsschritt zum Berechnen eines SN-Verhältnisses jedes der empfangenen Signale, die OFDM-modulierte Signale sind, die durch eine Anzahl L von Zweigen (100a bis 400a) diversittätsempfangen werden; und einen Eingangssignal-Erzeugungsschritt zum Erzeugen eines Eingangssignals, indem die empfangenen Signale in Abhängigkeit von den SN-Verhältnissen gewichtet werden, die mit dem SN-Verhältnisberechnungsschritt berechnet werden, und Kombinieren gewichteter empfangener Signale, wobei das Verfahren einen Demodulationsprozess zum Demodulieren des Eingangssignals umfasst, das bei dem Eingangssignal-Erzeugungsschritt erzeugt wird, wobei der SN-Verhältnisberechnungsschritt Folgendes umfasst:

Berechnen von X (n), das durch die folgende Gleichung definiert ist:

$$X_{(n)} = \sum_{i=n-N}^{n} \left| S(I, i + Nu) - S(I, i) \right|$$

$$(7)$$

wobei S(I, i) eine Ausgabe eines Signals ist, das eine i-te Abtastung eines I-ten Symbols des empfangenen Signals ist, N eine Abtastzahl einer n-ten Abtastung des I-ten Symbols ist, N eine ganze Zahl kleiner als Ng ist, die die Anzahl der Abtastwerte des Schutzintervalls des I-ten Symbols ist und $N_u$ die Anzahl der Abtastwerte eines gültigen Symbols ist und

Berechnen von SN(I), das das SN-Verhältnis ist, unter Verwendung der folgenden Gleichung:

$$SN(I) = \frac{N_{max}(I) - N_{min}(I)}{N_{min}(I)}$$

$$(8)$$

wobei $N_{max}$ (I) der maximale Wert des I-ten Symbols ist und $N_{min}$ (I) ist der minimale Wert des I-ten Symbols ist.

6. Diversitätsempfangsverfahren nach Anspruch 5, wobei nach dem Berechnen des SN-Verhältnisses bei dem SN-Verhältnisberechnungsschritt und dem Erzeugen des Eingangssignals bei dem Eingangssignal-Erzeugungsschritt, das Eingangssignal einem FFT-Prozess unterzogen wird.

7. Diversitätsempfangsvorrichtung nach Anspruch 1, wobei die Diversitätsempfangsvorrichtung eine digitale Fernsehempfangsvorrichtung ist.

**Revendications**

1. Dispositif de réception en diversité (10a ; 10b) comprenant une unité de calcul du rapport signal sur bruit (105 à 405) qui calcule un rapport signal sur bruit de chacun des signaux reçus qui sont des signaux modulés OFDM reçus en diversité par L nombre de branches (100a à 400a), dans lequel l'unité de calcul du rapport signal sur bruit (105 à 405) calcule le rapport signal sur bruit de la manière suivante :

X(n) qui est défini par l'équation ci-dessous est calculé en premier :

$$X_{(n)} = \sum_{i=n-N}^{n} \left| S(I, i + Nu) - S(I, i) \right|$$

$$(1)$$

équation dans laquelle S(I, i) est une sortie d'un signal qui est un i-ième échantillon d'un I-ième symbole du signal reçu, n est un numéro d'échantillon d'un n-ième échantillon du I-ième symbole, N est un nombre entier plus petit que $N_g$ qui est le nombre d'échantillons de l'intervalle de garde du I-ième symbole, et $N_u$ est le nombre d'échantillons d'un symbole valide, puis

SN(I) qui est le rapport signal sur bruit est calculé en utilisant l'équation ci-dessous :

$$SN(I) = \frac{N_{max}(I) - N_{min}(I)}{N_{min}(I)}$$

$$(2)$$

dans laquelle $N_{max}(I)$ est la valeur maximum du I_ième symbole et $N_{min}(I)$ est la valeur minimum du I-ième symbole.

2. Dispositif de réception en diversité (10a ; 10b) selon la revendication 1, dans lequel la valeur de N est définie par l'équation ci-dessous :

$$N = Ng/8 \qquad\qquad (3).$$

3. Dispositif de réception en diversité (10a ; 10b) selon la revendication 1 ou 2, comprenant en outre une unité de pondération/combinaison du signal d'entrée (500) qui crée un signal d'entrée en pondérant les signaux reçus selon les rapports signal sur bruit qui sont calculés par l'unité de calcul du rapport signal sur bruit (105 à 405) et en combinant les signaux reçus pondérés, dans lequel
l'unité de pondération/combinaison du signal d'entrée (500) utilise un coefficient de pondération $W_j$ qui est exprimé par l'équation ci-dessous :

$$W_j = \frac{SN_j{}^2}{\sum\limits_{k=1}^{L} SN_k{}^2} \qquad\qquad (4)$$

dans laquelle $SN_j$ est le rapport signal sur bruit du signal reçu qui est reçu en diversité par une j-ième branche, et l'unité de pondération/combinaison du signal d'entrée (500) crée le signal d'entrée en utilisant l'équation ci-dessous :

$$SI = \sum\limits_{j=1}^{L} (Sj + Nj) \times Wj \qquad\qquad (5)$$

dans laquelle SI est le signal d'entrée, $S_j$ et une sortie du signal reçu d'une branche j ($1 \leq j \leq L$), et $N_j$ est une sortie de bruit.

4. Dispositif de réception en diversité (10b) selon l'une quelconque des revendications 1, 2 et 3, comprenant en outre :

une unité d'identification d'intervalle de garde (106b1) qui identifie une période d'un intervalle de garde du l-ième symbole en utilisant $X_{Ng}(n)$ qui est défini par l'équation ci-dessous :

$$X_{Ng}(n) = \sum\limits_{i=n-Ng}^{n} \big| S(I, i + Nu) - S(I, i) \big| \qquad\qquad (6),$$

et
une unité de calcul du bruit à trajets multiples (106a1) qui calcule une différence entre la valeur de X(n) et la valeur de $N_{min}(I)$, qui est causée par le bruit à trajets multiples, de la période de l'intervalle de garde qui est identifié par l'unité d'identification de l'intervalle de garde (106b1) et qui, si cette différence est égale à ou plus grande qu'un seuil prédéterminé, notifie ce fait à l'unité de pondération/combinaison du signal d'entrée (500), dans lequel

si l'unité de pondération/combinaison du signal d'entrée (500) est notifiée par l'unité de calcul du bruit à trajets multiples (106a1) que la différence est égale à ou plus grande que le seuil prédéterminé, l'unité de pondération/combinaison du signal d'entrée (500)
définit le coefficient de pondération, qui est utilisé pour créer le signal d'entrée en combinant les signaux reçus qui sont reçus en diversité par les branches, à une valeur égale à ou plus petite qu'une valeur prédéterminée.

5. Procédé de réception en diversité comprenant une étape de calcul du rapport signal sur bruit qui calcule un rapport signal sur bruit de chacun des signaux reçus qui sont des signaux modulés OFDM reçus en diversité par L nombre de branches (100a à 400a) ; et une étape de création du signal d'entrée qui crée un signal d'entrée en pondérant les signaux reçus dépendant des rapports signal sur bruit qui sont calculés lors de l'étape de calcul du rapport signal sur bruit et en combinant les signaux reçus pondérés, ce procédé comprenant un processus de démodulation consistant à démoduler le signal d'entrée qui est créé lors de l'étape de création du signal d'entrée, l'étape de calcul du rapport signal sur bruit comprenant :

le calcul de X(n) qui est défini par l'équation ci-dessous :

$$X_{(n)} = \sum_{i=n-N}^{n} \left| S(I, i+Nu) - S(I, i) \right|$$

(7)

dans laquelle $S(I, i)$ est une sortie d'un signal qui est un i-ième échantillon d'un I-ième symbole du signal reçu, n est un numéro d'échantillon d'un n-ième échantillon du I-ième symbole, N est un nombre entier plus petit que $N_g$ qui est le nombre d'échantillons de l'intervalle de garde du I-ième symbole, et $N_u$ est le nombre d'échantillons d'un symbole valide, et

le calcul de SN(I) qui est le rapport signal sur bruit en utilisant l'équation ci-dessous :

$$SN(I) = \frac{N_{max}(I) - N_{min}(I)}{N_{min}(I)}$$

(8)

dans laquelle $N_{max}(I)$ est la valeur maximum du I_ième symbole et $N_{min}(I)$ est la valeur minimum du I-ième symbole.

6. Procédé de réception en diversité selon la revendication 5, dans lequel, après que le rapport signal sur bruit a été calculé lors de l'étape de calcul du rapport signal sur bruit et que le signal d'entrée a été créé lors de l'étape de création du signal d'entrée, le signal d'entrée est soumis à un processus de transformation de Fourier rapide.

7. Dispositif de réception en diversité selon la revendication 1, ce dispositif de réception en diversité étant un appareil récepteur de télévision numérique.

# FIG.1

# FIG.2

| GUARD INTERVAL | VALID SYMBOL | GUARD INTERVAL | VALID SYMBOL |

$X(n)$

min $\Rightarrow$ Nmin(I)      max $\Rightarrow$ Nmax(I)      min $\Rightarrow$ Nmin(I+1)      max $\Rightarrow$ Nmax(I+1)

$\rightarrow SN(I)=[SN(I)-N(I)]/N(I)$      $\rightarrow SN(I+1)$

# FIG.3

(a) GUARD INTERVAL ... GUARD INTERVAL

(b) DELAYED WAVE ... PRECEDING GHOST ... DELAYED WAVE

(c) $X(n)$ ... max ... max ... min ... min

# FIG.4

# FIG.5

EP 2 200 201 B1

# FIG.6

MULTIPATH DETECTING UNIT — 106

FROM SN-RATIO
CALCULATING UNIT
105

INFORMATION
ABOUT X(n)

GUARD-
INTERVAL-
POSITION
IDENTIFYING
UNIT — 106b1

INFORMATION
ABOUT
POSITION OF
GUARD
INTERVAL

MULTIPATH-
NOISE
CALCULATING
UNIT — 106a1

# FIG.7

FIG.8

FIG.8

DIVERSITY RECEIVING DEVICE

10c

FIRST BRANCH — 100c

108 → TUNER UNIT (101) → AD CONVERTING UNIT (102) → ORTHOGONAL DEMODULATING UNIT (103)

PHASE-DIFFERENCE CORRECTING UNIT (104)

FIRST LOW-PASS FILTERING UNIT (105a) → FIRST SN-RATIO CALCULATING UNIT (106a)

SECOND LOW-PASS FILTERING UNIT (105b) → SECOND SN-RATIO CALCULATING UNIT (106b)

THIRD LOW-PASS FILTERING UNIT (105c) → THIRD SN-RATIO CALCULATING UNIT (106c)

FOURTH LOW-PASS FILTERING UNIT (105d) → FOURTH SN-RATIO CALCULATING UNIT (106d)

FIFTH LOW-PASS FILTERING UNIT (105e) → FIFTH SN-RATIO CALCULATING UNIT (106e)

PARTICULAR-FREQUENCY NOISE CORRECTING UNIT (107)

FOURTH BRANCH — 400c

408 → TUNER UNIT (401) → AD CONVERTING UNIT (402) → ORTHOGONAL DEMODULATING UNIT (403)

PHASE-DIFFERENCE CORRECTING UNIT (404)

FIRST LOW-PASS FILTERING UNIT (405a) → FIRST SN-RATIO CALCULATING UNIT (406a)

SECOND LOW-PASS FILTERING UNIT (405b) → SECOND SN-RATIO CALCULATING UNIT (406b)

THIRD LOW-PASS FILTERING UNIT (405c) → THIRD SN-RATIO CALCULATING UNIT (406c)

FOURTH LOW-PASS FILTERING UNIT (405d) → FOURTH SN-RATIO CALCULATING UNIT (406d)

FIFTH LOW-PASS FILTERING UNIT (405e) → FIFTH SN-RATIO CALCULATING UNIT (406e)

PARTICULAR-FREQUENCY NOISE CORRECTING UNIT (407)

COMBINING UNIT (500) → FFT UNIT (600) → DEMODULATING UNIT (700) → DIGITAL SIGNAL

# FIG.9

| GUARD INTERVAL | VALID SYMBOL | GUARD INTERVAL | VALID SYMBOL |
|---|---|---|---|

X(n)

$\mathrm{min} \Rightarrow \mathrm{Nmin(I)}$  $\quad$  $\mathrm{max} \Rightarrow \mathrm{Nmax(I)}$  $\quad$  $\mathrm{min} \Rightarrow \mathrm{Nmin(I+1)}$  $\quad$  $\mathrm{max} \Rightarrow \mathrm{Nmax(I+1)}$

$\rightarrow \mathrm{SN(I)} = [\mathrm{SN(I)} - \mathrm{N(I)}]/\mathrm{N(I)}$  $\qquad$  $\rightarrow \mathrm{SN(I+1)}$

# FIG.10-1

# FIG.10-2

# FIG.10-3

# FIG.11

**EP 2 200 201 B1**

**Patent documents cited in the description**

- JP 2003051768 A
- JP 2006253915 A

- JP H9312602 B